# EUROPEAN PATENT APPLICATION

(11) **EP 1 598 952 A1**
(43) Date of publication of application: **23.11.2005**
(21) Application number: 05090143.8
(22) Date of filing: 18.05.2005
(51) Int. Cl.: H04B 7/005, H04Q 7/38

(54) **Mobile communication system, base station controller, and method for changing the cumulated downlink transmission power threshold**

(30) Priority: 19.05.2004 JP 2004148518
(71) Applicant: NEC CORPORATION, Minato-ku, Tokyo 108-8001 (JP)
(72) Inventor: Sano, Fumiharu, Minato-ku Tokyo (JP)
(74) Representative: Wenzel & Kalkoff

(57) **Abstract**

There is provided a base station controller that can effectively allocate downlink transmission power to services expected by subscribers within a cell.

A traffic collecting section collects the occurrence rates of CS and PS calls on a cell-by-cell basis at predetermined time intervals. A traffic analyzing section analyzes the data collected by the traffic collecting section to determine trends of which of CS and PS call types has occurred at what rate and in what time slot. A cumulated downlink transmission power threshold determining algorithm section uses information outputted from the traffic analyzing section to determine which of a number of cumulated downlink transmission power threshold patterns is an optimum choice, according to a cumulated downlink transmission power threshold determining algorithm.

## Description

### BACKGROUND OF THE INVENTION

### Field of the Invention

The present invention relates to a mobile communication system and a base station controller and a cumulated downlink transmission power threshold changing method used therefor and, in particular, to a method for changing a cumulated downlink transmission power threshold for controlling incoming calls in a W-CDMA (Wideband-Code Division Multiple Access) system.

### Description of the Related Art

In a W-CDMA mobile communication system, a base station controller controls incoming calls by using a fixed threshold (cumulated downlink transmission power threshold) for each cell, because the user flow in a cell varies depending on the time of day and no mechanism is provided for predicting trends in occurrence of CS (Circuit Switched) calls or PS (Packet Switched) calls. The cumulated downlink transmission power threshold is a transmission power threshold for rejecting a call before the cumulated downlink transmission power within the cell of a base station (Node B) reaches the maximum value specified by W-CDMA admission control function. The cumulated downlink transmission power is a cumulative value that is obtained by cumulating transmission power from the base station to mobile stations. Every time a call is accepted, transmission power for the call is added.

The threshold can be changed by an operator. However, the threshold is not automatically changed according to a prediction of the trends in occurrence of CS calls and PS calls.

Accordingly, CS calls can be rejected too early (because of a low threshold) and thus the CS call connection rate can decrease or, on the other hand, PS calls can be rejected too early (because of a low threshold) and thus the PS call connection rate can decrease. When the cumulated downlink transmission power for CS calls exceeds the threshold for CS calls, the new CS call is rejected and is made an incomplete call. When the cumulated downlink transmission power for PS calls exceeds the threshold for PS calls, the new PS call is rejected and is made an incomplete call.

A method for controlling call admission in a mobile communication system in which different types of services are provided has been proposed, in which a plurality of thresholds for accepting calls of the different types of services are stored and, when a call is received from a mobile station, one of the thresholds is selected according to the type of service for the mobile station and call admission is controlled with the selected threshold (for example, see Japanese Patent Laid-Open No. 10-13937).

A problem with conventional mobile communication systems as described above is that because the base station controller uses a fixed threshold for each cell even though the user flow or the trend in occurrence of CS or PS calls in each cell varies depending on the time of day, CS calls are rejected too early (because the threshold is low) and consequently the CS call connection rate decreases or, on the other hand, PS calls are rejected too early (because the threshold is low) and consequently the PS call connection rate decreases. The problem cannot be solved by the method disclosed in Japanese Patent Laid-Open No. 10-13937.

### BRIEF SUMMARY OF THE INVENTION

An object of the present invention is to solve the problem and provide a mobile communication system, a base station controller, and a cumulated downlink transmission power threshold changing method used therefor that can effectively allocate downlink transmission power to services expected by subscribers within a cell.

A mobile communication system according to the present invention includes a base station controller which manages a cumulated downlink transmission power value for each call type on a cell and a threshold for each call type on the cell and restricts incoming calls by comparing the cumulated downlink transmission power value with the threshold, wherein the base station controller includes: collecting means collecting, at predetermined time intervals, the occurrence rate of calls of each type that have occurred in the cell; analyzing means analyzing the occurrence rate of calls of each type to determine the trends in occurrence of calls of each type; and determining means determining the value of the threshold on the basis of the analysis by the analyzing means.

A base station controller according to the present invention manages a cumulated downlink transmission power value for each call type on a cell and a threshold for each call type on the cell and restricts incoming calls by comparing the cumulated downlink transmission power value with the threshold, wherein the base station controller includes: collecting means collecting, at predetermined time intervals, the occurrence rate of calls of each type that have occurred in the cell; analyzing means analyzing the occurrence rate of calls of each type to determine the trends in occurrence of calls of each type; and determining means determining the value of the threshold on the basis of the analysis by the analyzing means.

A cumulated downlink transmission power threshold changing method according to the present invention is used in a base station controller which manages a cumulated downlink transmission power value for each call type on a cell and a threshold for each call type on the cell and restricts incoming calls by comparing the cumulated downlink transmission power value with the threshold, wherein the method includes: a collecting step of collecting, at predetermined time intervals, the occurrence rate of calls of each type that have occurred in the cell; an analyzing step of analyzing the occurrence rate of calls of each type to determine the trends in occurrence of calls of each type; and a determining step of determining the value of the threshold on the basis of the analysis at the analyzing step.

Thus, the mobile communication system of the present invention enables downlink transmission power to be allocated effectively to services expected by subscribers in the cell. Accordingly, the mobile communication system of the present invention can prevent CS calls from being rejected too early (because of a low threshold), thereby improving the connection rate of CS calls; it also can prevent PS calls from being rejected too early, thereby improving the connection rate of PS calls.

### BRIEF DESCRIPTION OF THE DRAWINGS

- FIG. 1: is a block diagram showing a configuration of a base station controller according to an embodiment of the present invention;
- FIG. 2: shows call occurrence rates of calls of different call types in different time slots;
- FIG. 3: shows exemplary cumulated downlink transmission power threshold patterns used in the embodiment of the present invention;
- FIG. 4: shows an exemplary scheduling table used in the embodiment of the present invention; and
- FIG. 5: is a flowchart showing a flow of cumulated downlink transmission power threshold determining algorithm used in the cumulated downlink transmission power threshold determining algorithm section shown in FIG. 1.

### DETAILED DESCRIPTION OF THE PREFERRED EMBODIMENTS

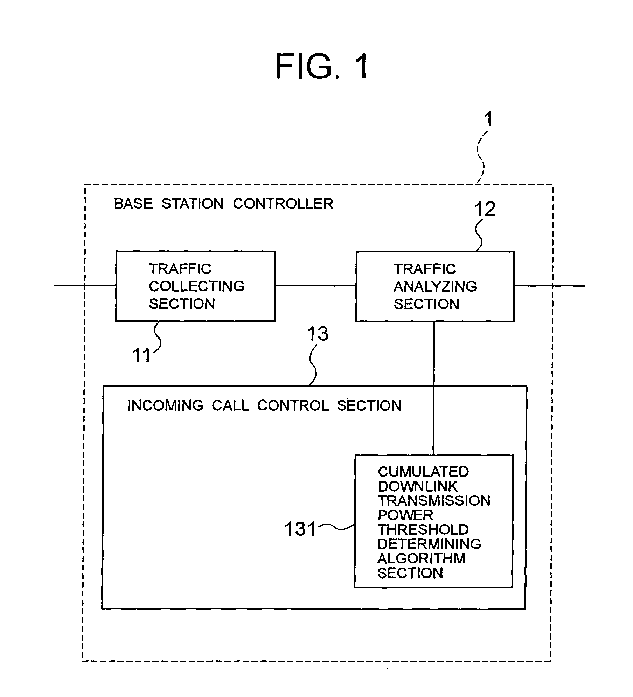

Embodiments of the present invention will be described below with reference to the accompanying drawings. The base station controller 1 in FIG. 1 is used in a W-CDMA (Wideband-Code Division Multiple Access) mobile communication system and includes a traffic collecting section 11, a traffic analyzing section 12, and an incoming call control section 13. The incoming call control section 13 includes a cumulated downlink transmission power threshold determining algorithm section 131.

The traffic collecting section 11 collects the occurrence rates of CS (Circuit Switched) calls and PS (Packet Switched) calls on a cell-by-cell basis at regular time intervals.

The traffic analyzing section 12 analyzes data collected by the traffic collecting section 11 to determine the trends of which of CS and PS call types has occurred at what rate and in what time slot.

The cumulated downlink transmission power threshold determining algorithm section 131 uses output information from the traffic analyzing section 12 to determine an optimum cumulated downlink transmission power threshold pattern according to a cumulated downlink transmission power threshold determining algorithm.
Models of cumulated downlink transmission power threshold patterns are generated beforehand from statistical data. Examples of the models are patterns 1 to 5, which will be described later. The optimum pattern is determined primarily based on which of the types of calls, PS or CS calls, has the higher occurrence rate. For example, when the occurrence rate of CS calls is high in one time slot, the cumulated downlink transmission power threshold for CS calls in the one time slot is set to a high value. That is, a pattern in which the threshold for CS calls is high is selected as the optimum pattern in the one time slot. Time slots and patterns suitable for the time slots are subdivided flexibly according to the ratio between the occurrence rate of PS calls and the occurrence rate of CS calls, and the cumulated downlink transmission power threshold is changed accordingly.

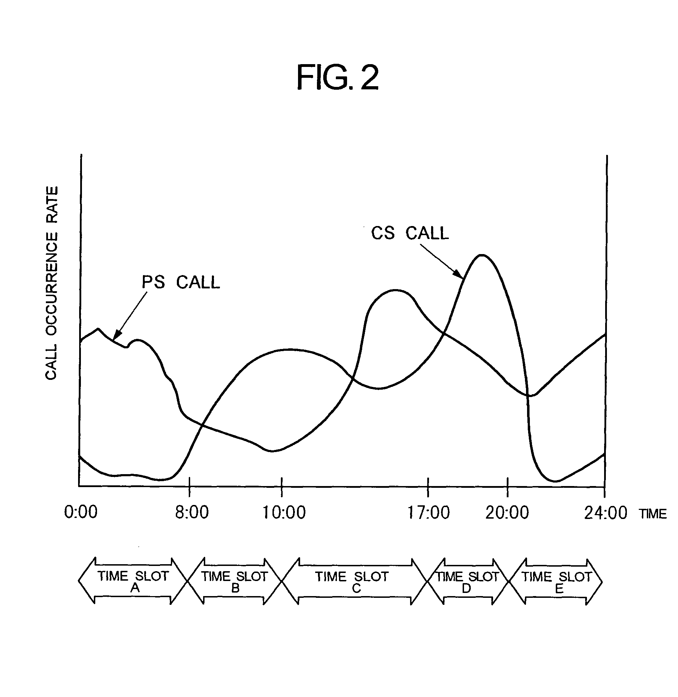

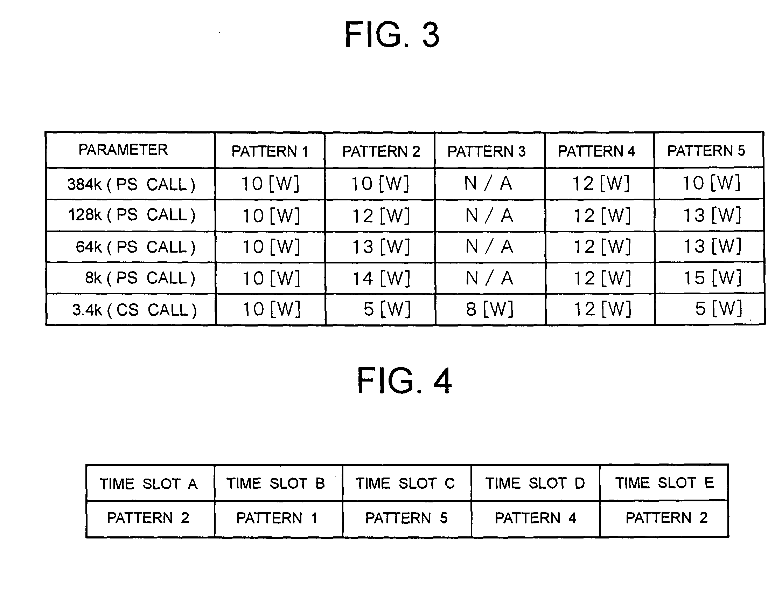

FIG. 2 shows an example of information outputted from the traffic collecting section 11. In FIG. 3, pattern 1 ("10 [W]"), pattern 2 ("10 [W]", "12 [W]", "13 [W]", "14 [W]", "5 [W]"), pattern 3 ("N/A", "8 [W]"), pattern 4 ("12 [W]"), and pattern 5 ("10 [W]", "13 [W]", "15 [W]", "5 [W]") are set for QoS (Quality of Service) class parameters (3.4 K, 8 K, 64 K, 128 K, and 384 K). In this case, the traffic collecting section 11 collects the occurrence rate of PS calls of "8 K", the occurrence rate of PS calls of "64 K", the occurrence rate of PS calls of "128 K", the occurrence rate of PS calls of "384 K" and the occurrence rate of CS calls of "3.4 K"

The scheduling table in FIG. 4 lists patterns set for time slots A to E. "Pattern 2" is set for "time slot A", "pattern 1" is set for "time slot B", "pattern 5" is set for "time slot C", "pattern 4" is set for "time slot D", and "pattern 2" is set for "time slot E" in the scheduling table.

The cumulated downlink transmission power threshold determining algorithm section 131 selects an optimum one from among the cumulated downlink transmission power threshold patterns shown in FIG. 3 (the threshold values shown in FIG. 3 are only illustrative), on the basis of output information from the traffic analyzing section 12. For the example shown in FIG. 2, cumulated downlink transmission power thresholds will be determined according to the scheduling table shown in FIG. 4.

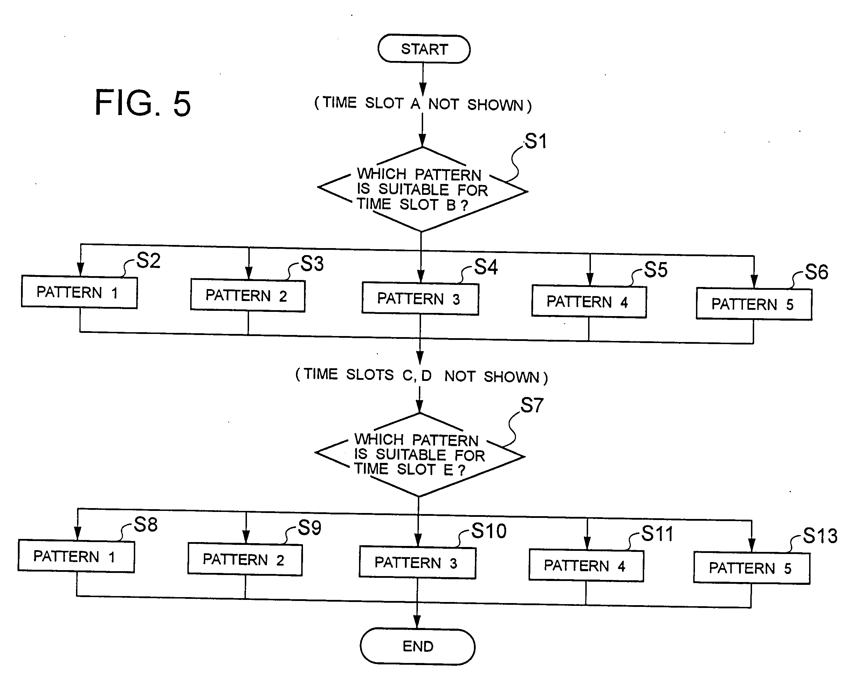

FIG. 5 is a flowchart showing a flow of a cumulated downlink transmission power threshold determining algorithm used in the cumulated downlink transmission power threshold determining algorithm section 131 shown in FIG.1. Referring to FIGS. 1 to 5, a cumulated downlink transmission power threshold changing method of the base station controller 1 according to the embodiment of the present invention will be described below.

One of the functions of the base station controller 1 used in the W-CDMA mobile communication system is the function (the incoming call control section 13) of controlling incoming calls on a cell-by-cell basis. The assumption in this embodiment is that the traffic collecting section 11 has been already provided.

The traffic collecting section 11 counts CS calls occurred in a cell at time intervals of 5 minutes, for example. It also counts Background and Interactive PS calls of downlink- (from the network to mobile terminals) QoS classes of 8 K, 64 K, 128 K, and 384 K in a cell at time intervals of 5 minutes. The traffic analyzing section 12 analyzes the trends in occurrence of calls in each time slot, on the basis of the counter values provided at time intervals of 5 minutes.

An example of information outputted from the traffic collecting section 11 is shown in FIG. 2. In FIG. 2, "time slot A" is "0:00 to 8:00". A period of 24 hours is divided into five time slots A to E in this example, because excessively small time slots causes frequent pattern switching and can increase processing load on the base station controller 1 accordingly. The manner of division is determined in the traffic analyzing section 12.

The traffic analyzing section 12 outputs information as to which of the call types have precedence. For example, it outputs information indicating that PS calls of the 384 K occurred most frequently among the calls in "time slot A", or that CS calls occurred most frequently but PS calls of the 64 K service kept occurring at a constant rate in "time slot B". The information is inputted into the cumulated downlink transmission power threshold determining algorithm section 131.

The cumulated downlink transmission power threshold determining algorithm section 131 determines patterns for time slots A to E according to the algorithm shown in FIG.5 (steps S1 to S 13) by using the inputted information. For example, the cumulated downlink transmission power threshold determining algorithm section 131 determines that downlink transmission power can be used most effectively with "pattern 1" among the patterns listed in FIG. 3 in "time slot B" and selects "pattern 1" (steps S1 and S2 in FIG. 5).

The cumulated downlink transmission power threshold determining algorithm section 131 also determines that "pattern 2" listed in FIG. 3 is most suitable for "time slot E" for example and selects "pattern 2" (steps S7 and S9 in FIG. 5).

As a result, the cumulated downlink transmission power threshold determining algorithm section 131 arranges information specifying which of the cumulated downlink transmission power threshold patterns should be used in each time slot, as the scheduling table shown in FIG. 4. The base station controller 1 changes the cumulated downlink transmission power threshold for each call type according to the scheduling table.

In the example described above, a day is divided into five time slots A to E in the example of output information shown in FIG. 2. However, other ways of division can be used that are adapted to annual or special events. For example, CS calls may be given precedence over PS calls in the nighttime at New Year at the Harajuku station, or PS calls may be given precedence over CS calls in the Yoyogi National Stadium when many young people line up all night for tickets for a concert because they may watch videos on their mobile terminals while waiting.

In this way, downlink transmission power can be effectively allocated to services expected by subscribers within each cell according to the present embodiment. Thus, the present embodiment can prevent CS calls from being rejected too early (because of a low threshold), thereby improving the connection rate of CS calls. The present embodiment can also prevent PS calls from being rejected too early, thereby improving the connection rate of PS calls.

## Claims

1. A mobile communication system including a base station controller which manages a cumulated downlink transmission power value for each call type on a cell and a threshold for each call type on the cell and restricts incoming calls by comparing the cumulated downlink transmission power value with the threshold, the base station controller comprising:
collecting means collecting, at predetermined time intervals, the occurrence rate of calls of each type that have occurred in the cell;
analyzing means analyzing the occurrence rate of calls of each type to determine the trends in occurrence of calls of each type;
determining means determining the value of the threshold on the basis of the analysis by the analyzing means.

2. Mobile communication system according to claim 1, wherein the analyzing means analyzes the occurrence rate of calls of each type to determine the trends in occurrence of calls of each type in each of predetermined time slots.

3. Mobile communication system according to claim 2, wherein the determining means determines the value of the threshold to be used in each of the time slots, on the basis of the analysis by the analyzing means.

4. Mobile communication system according to any of claims 1 to 3, wherein the base station changes the value of the threshold according to the determined results of the determining means.

5. Mobile communication system according to any of claims 1 to 4, being a W-CDMA (Wideband-Code Division Multiple Access) system.

6. Mobile communication system according to claim 5, wherein the call types include at least a circuit switched call type and a packet switched call type.

7. A base station controller which manages a cumulated downlink transmission power value for each call type on a cell and a threshold for each call type on the cell and restricts incoming calls by comparing the cumulated downlink transmission power value with the threshold, comprising:
collecting means collecting, at predetermined time intervals, the occurrence rate of calls of each type that have occurred in the cell;
analyzing means analyzing the occurrence rate of calls of each type to determine the trends in occurrence of calls of each type;
determining means determining the value of the threshold on the basis of the analysis by the analyzing means.

8. Base station controller according to claim 7, wherein the analyzing means analyzes the occurrence rate of calls of each type to determine the trends in occurrence of calls of each type in each of predetermined time slots.

9. Base station controller according to claim 8, wherein the determining means determines the value of the threshold to be used in each of the time slots, on the basis of the analysis by the analyzing means.

10. Base station controller according to any of claims 7 to 9, wherein the base station changes the value of the threshold according to the determined results of the determining means.

11. Base station controller according to any of claims 7 to 10, using a W-CDMA (Wideband-Code Division Multiple Access) method.

12. Base station controller according to claim 11, wherein the call types include at least a circuit switched call type and a packet switched call type.

13. A cumulated downlink transmission power threshold changing method of a base station controller which manages a cumulated downlink transmission power value for each call type on a cell and a threshold for each call type on the cell and restricts incoming calls by comparing the cumulated downlink transmission power value with the threshold, comprising:
a collecting step of collecting, at predetermined time intervals, the occurrence rate of calls of each type that have occurred in the cell;
an analyzing step of analyzing the occurrence rate of calls of each type to determine the trends in occurrence of calls of each type;
a determining step of determining the value of the threshold on the basis of the analysis at the analyzing step.

14. Cumulated downlink transmission power threshold changing method according to claim 13, wherein the analyzing step analyzes the occurrence rate of calls of each type to determine the trends in occurrence of calls of each type in each of predetermined time slots.

15. Cumulated downlink transmission power threshold changing method according to claim 14, wherein the determining step determines the value of the threshold to be used in each of the time slots, on the basis of the analysis at the analyzing step.

16. Cumulated downlink transmission power threshold changing method according to any of claims 13 to 15, comprising a step of changing the value of the threshold according to the determined results of the determining step.

17. Cumulated downlink transmission power threshold changing method according to any of claims 13 to 16, wherein the base station controller is a base station controller in a W-CDMA (Wideband-Code Division Multiple Access) mobile communication system.

18. Cumulated downlink transmission power threshold changing means according to claim 17, wherein the call types include at least a circuit switched call type and a packet switched call type.
